# EUROPÄISCHE PATENTANMELDUNG

(11) **EP 2 034 411 A1**
(43) Veröffentlichungstag der Anmeldung: **11.03.2009**
(21) Anmeldenummer: 07017484.2
(22) Anmeldetag: 06.09.2007
(51) Int. Cl.: G06F 11/20

(54) **Verfahren zum Austausch eines elektrischen Geräts mit Parametrierdaten durch ein Ersatzgerät**

(71) Anmelder: SIEMENS AKTIENGESELLSCHAFT, 80333 München (DE)
(72) Erfinder: Herberth, Harald, 90522 Oberasbach (DE); Lange, Ronald, 90766 Fürth (DE)

(57) **Zusammenfassung**

Die Erfindung betrifft ein Verfahren zum Austausch eines ersten elektrischen Geräts (1) mit gespeicherten Parametrierdaten durch ein Ersatzgerät (2), wobei die Parametrierdaten für das Ersatzgerät (2) analog zur RAID-Technologie bereitgestellt werden.

## Beschreibung

Die Erfindung betrifft ein Verfahren zum Austausch eines ersten elektrischen Geräts mit gespeicherten Parametrierdaten durch ein Ersatzgerät.

Geräte, insbesondere Automatisierungsgeräte, werden durch Parametrierung an den speziellen Einsatzzweck einer Anlage angepasst. Im Falle eines Gerätetauschs, typischerweise aufgrund eines Defekts, müssen diese Parametrierdaten auf das Ersatzgerät gebracht werden. Hierzu sind mehrere Lösungen bekannt. Zum Beispiel können die Parametrierdaten auf einem wechselbaren Speichermedium, z.B. einer Speicherkarte abgespeichert sein, die nach Austausch durch ein Ersatzgerät in dieses umgesteckt wird. Dies ist zwar aus Anwendersicht eine einfache Lösungsmöglichkeit, da außer dem Austausch des Geräts und dem Umstecken der Speicherkarte keine weiteren Anwenderaktionen anfallen, aber dies ist keine Lösung für den Fall, dass das Gerät komplett defekt ist inklusive der Speicherkarte. Hierbei ist außerdem von Nachteil, dass die Speicherkarten in den Geräten vorgehalten werden müssen, was sowohl ein Kosten- als auch Wartungsproblem darstellt. Weiterhin lässt sich das Problem in bekannter Weise dadurch lösen, dass neben dem eigentlichen defekten Gerät und dem Ersatzgerät ein zusätzliches Gerät vorhanden ist, auf dem die Parametrierdaten persistent abgelegt sind. Bei der ersten Variante dieser Lösung werden die Daten von dem ursprünglich nicht defekten Gerät auf das zusätzliche Gerät geladen und von dort nach Austausch auf das Ersatzgerät. Dabei muss allerdings die Verfügbarkeit des zusätzlichen Geräts sichergestellt sein. Außerdem ist die Hantierbarkeit dieses Verfahrens eingeschränkt. Bei der zweiten Lösungsvariante werden die Daten grundsätzlich von dem zusätzlichen Gerät geladen, d.h. nicht nur im Austauschfall. Bei dieser Variante muss das Ersatzgerät eine Grundparametrierung erhalten, um seine weiteren Parametrierdaten laden zu können. Diese Grundparameter umfassen die eigene Identität und die Adresse des Geräts, von dem die Parameter zu laden sind. Für die Herkunft der Grundparameter kann es unter anderem die folgenden Quellen geben: manuelle Eingabe an dem Gerät, falls das Gerät über eine Eingabemöglichkeit verfügt, oder aber manuelle Eingabe an einem weiteren Gerät und Übermittlung der Grundparameter an das Ersatzgerät per Kommunikation, oder aber automatische Erkennung des Ersatzgerätes durch ein weiteres Gerät anhand seiner Topologieinformation und der Übermittlung der Grundparameter aus einer Datenhaltung im erkennenden Gerät.

Der Erfindung liegt die Aufgabe zugrunde, ein Verfahren der oben genannten Art dahingehend zu verbessern, dass die bisherigen Nachteile vermieden werden, d.h. die Parametrierdaten für das Ersatzgerät auf einfache Weise zur Verfügung gestellt werden.

Die Aufgabe wird dadurch gelöst, dass die Parametrierdaten für das Ersatzgerät analog zur RAID-Technologie (Redundant Array of Independent Discs) bereitgestellt werden.

Vorteilhafte Weiterbildungen des Verfahrens sind den Unteransprüchen 2 bis 10 zu entnehmen.

Ein Ausführungsbeispiel der Erfindung wird im Folgenden anhand einer Zeichnung näher erläutert.

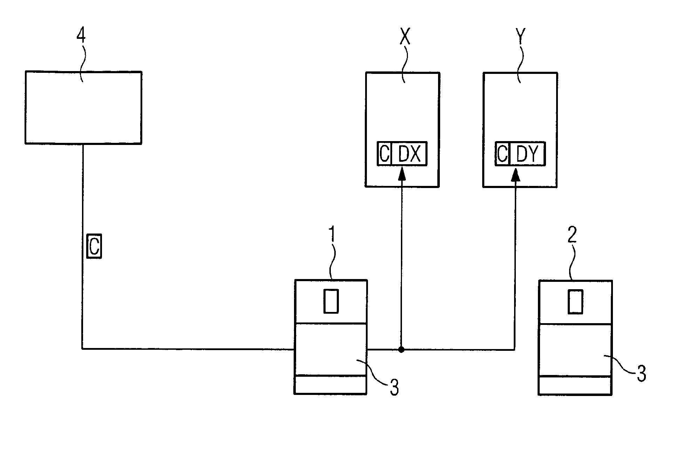

Die Grundidee der Erfindung ist die verteilte und redundante Speicherung der Parametrierdaten auf der Basis der bekannten RAID-Technologie (Redundant Array of Independent Discs) für die. Aus Sicht des ersten elektrischen Geräts 1 bzw. des Ersatzgeräts 2 gemäß der Figur wird stets ein RAID-Controller 3 angesprochen, der auf beiden Geräten 1, 2 jeweils vorhanden ist. Dieser RAID-Controller 3 kann sowohl hardware- als auch softwaremäßig ausgeführt sein. Zusätzlichen Geräten X, Y sind Speicherbereiche DX und DY zugeordnet, die zusammenhängend den Speicherbereich der RAID-Technologie ergeben, also vergleichbar mit zwei Festplatten. Den Geräten X, Y ist außerdem jeweils ein Bereich zugeordnet, der die Konfigurations-Information C des RAID-Verbunds enthält. Die Konfigurations-Information C wird in einem vorangehenden Engineering-Schritt erstellt. Der Anwender stellt hier die Art des RAID-Verbundes ein, wobei er die Redundanzstärke wählen kann und außerdem angibt, wie verteilt die Parametrierdaten liegen sollen. Ferner kann er auswählen, welche Geräte in den RAID-Verbund aufgenommen werden sollen. Dies ist insbesondere in der Automatisierungstechnik ein wichtiger Aspekt, da die Daten nicht "irgendwo" in der Anlage gespeichert werden sollen, sondern der Anwender genau vorhersagen kann, was bei einem Ausfall eines Geräts passiert. Die Konfigurations-Information C wird von einem Engineering-System 4 in das laufende Gerät 1 geladen und von dort im RAID-Verbund verteilt.

Nach dem Geräteaustausch muss eine Grundparametrierung des Ersatzgeräts 2 durchgeführt werden. Hierbei benötigt man eine oder mehrere Adressen der Geräte, welche im RAID-Verbund enthalten sind. Nach dem Laden der RAID-Konfiguration kann auf die weiteren Parametrierdaten zugegriffen werden.

Nach dem Laden der RAID-Konfiguration kann das Ersatzgerät 2 über den jetzt konfigurierten RAID-Controller auf die weiteren Parametrierdaten in DX und DY zugreifen.

Folgende Verbesserungen ergeben sich bezüglich der bisher bekannten Lösungsmöglichkeiten:

Bestehende Konzepte können unter einer einheitlichen Schnittstelle zusammengefasst werden. Insbesondere ist dadurch eine Kombination der bestehenden Konzepte möglich. So können Daten z.B. sowohl auf der Speicherkarte als auch auf anderen Geräten gespeichert werden (z.B. RAID 2). Bei einem Austausch kann bei funktionierender Speicherkarte nur diese ausgetauscht werden, was einen Performance-Vorteil mit sich bringt, da die Daten dem Ersatzgerät sofort zur Verfügung stehen. Ist die Speicherkarte auch defekt, werden die Daten von einem externen Gerät geladen.

Die Verteilung bzw. redundante Ablage der Parametrierdaten kann auch nachträglich geändert werden. Die Schnittstelle bleibt für das zu tauschende Gerät konstant. Heutige Verfahren bedingen, dass auch das zu tauschende Gerät die Art der Verteilung kennt.

Außerdem ist die Nutzung von vorhandenem freien Speicherplatz in der Anlage von Vorteil. Durch Stripping kann der vorhandene Speicherplatz auf anderen Automatisierungsgeräten, z.B. auf Gerät X und Y zu einer virtuellen Festplatte zusammengefasst werden. In den verschiedenen RAID-Stufen kann dieses Stripping mit redundanter Ablage kombiniert werden. Heutige Verfahren erfordern die Ablage der kompletten Parametrierdaten auf einem Gerät.

Insbesondere wenn ein RAID-Level zur Anwendung kommt, der auch Redundanz enthält, beeinträchtigt der Ausfall eines oder mehrerer Geräte die Verfügbarkeit der Parametrierdaten nicht.

Es müssen keine gesonderten Geräte zum Speichern bereitgestellt werden, eine Teilmenge der schon vorhandenen Geräte, die über eine Speicherkarte verfügen, stellen zusammen einen RAID-Verbund dar. Bei Ausfall eines dieser Geräte stehen die Daten allen anderen Geräten weiterhin zur Verfügung. Nach Tausch mit Speicherkarte ist die alte, sichere Konfiguration sofort wieder hergestellt. Sollte auch die Karte beschädigt sein, kann eine neue Karte gesteckt werden und über den RAID-Verbund wieder hergestellt werden.

Unter Parametrierung wird bei der vorliegenden Erfindung auch die Programmierung verstanden, d.h. unter Parametrierdaten sind auch die der Programmierung entsprechenden Daten und Informationen zu verstehen.

## Patentansprüche

1. Verfahren zum Austausch eines ersten elektrischen Geräts (1) mit gespeicherten Parametrierdaten durch ein Ersatzgerät (2), **dadurch gekennzeichnet, dass** die Parametrierdaten für das Ersatzgerät (2) analog zur RAID-Technologie bereitgestellt werden.

2. Verfahren nach Anspruch 1,
**dadurch gekennzeichnet, dass** das erste Gerät (1) und das Ersatzgerät (2) jeweils mit einem RAID-Controller (3) ausgestattet sind, die den RAID-Verbund von verschiedenen Speicherbereichen (DX, DY) der RAID-Technologie organisieren.

3. Verfahren nach Anspruch 2,
**dadurch gekennzeichnet, dass** die Parametrierdaten in den Speicherbereichen (DX, DY) abgespeichert sind.

4. Verfahren nach einem der oben genannten Ansprüche,
**dadurch gekennzeichnet, dass** die verschiedenen Speicherbereiche (DX, DY) in weiteren Geräten (X, Y) vorhanden sind.

5. Verfahren nach einem der oben genannten Ansprüche,
**dadurch gekennzeichnet, dass** zur Festlegung der Art des RAID-Verbundes in jedem der dazugehörigen Geräte (1, X, Y) eine Konfigurations-Information (C) abgelegt wird.

6. Verfahren nach einem der oben genannten Ansprüche,
**dadurch gekennzeichnet, dass** über die Konfigurations-Information (C) die Redundanzstärke und/oder die Verteilung der Parametrierdaten über die verschiedenen Speicherbereiche (DX, DY) wählbar ist.

7. Verfahren nach einem der oben genannten Ansprüche,
**dadurch gekennzeichnet, dass** die Konfigurations-Information (C) von einem Engineering-System (4) in das erste Gerät (1) geladen und von dort im RAID-Verbund verteilt wird.

8. Verfahren nach einem der oben genannten Ansprüche,
**dadurch gekennzeichnet, dass** nach dem Austausch des ersten Geräts (1) durch das Ersatzgerät (2) eine Grundparametrierung des Ersatzgeräts (2) durchgeführt wird, für die eine oder mehrere Adressen der am RAID-Verbund beteiligten Geräte benötigt wird.

9. Verfahren nach einem der oben genannten Ansprüche,
**dadurch gekennzeichnet, dass** die Konfigurations-Information (C) auf das Ersatzgerät (2) geladen wird und danach auf die Parametrierdaten zugegriffen werden kann.

10. Verfahren nach einem der oben genannten Ansprüche,
**dadurch gekennzeichnet, dass** die Geräte als Automatisierungsgeräte (1, 2, X, Y) ausgeführt sind.
